(19) Europäisches Patentamt
European Patent Office
Office européen des brevets

(11) **EP 1 139 124 A2**

(12) **EUROPEAN PATENT APPLICATION**

(43) Date of publication:
**04.10.2001 Bulletin 2001/40**

(51) Int Cl.$^7$: **G02B 6/16**

(21) Application number: **01100523.8**

(22) Date of filing: **09.01.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Jang, Ju-Nyung**<br>**Seocho-gu, Seoul (KR)** |
| (30) Priority: **10.01.2000 KR 2000000906** | (74) Representative: **Grünecker, Kinkeldey, Stockmair & Schwanhäusser Anwaltssozietät**<br>**Maximilianstrasse 58**<br>**80538 München (DE)** |
| (71) Applicant: **SAMSUNG ELECTRONICS CO., LTD.**<br>**Suwon-City, Kyungki-do (KR)** | |

(54) **Long period optical fiber grating filter**

(57) There is provided a temperature-compensated long period optical fiber grating filter using a multi-cladding structure. In an optical fiber used for the temperature-compensated long period optical fiber grating filter, a plurality of long period fiber gratings are formed periodically in a core and the core is doped with a first dopant to show a positive coupling wavelength shift as temperature increases. An inner cladding is formed around the core and has a refractive index lower than that of the core. An outer cladding is formed around the inner cladding and has a lower refractive index than that of the inner cladding, and is doped with a second dopant to show a negative coupling wavelength shift as the refractive index of the outer cladding is increased with temperature. The positive wavelength shift and the negative wavelength shift are canceled out, thereby compensating temperature.

FIG. 7

**Description**

The present invention relates generally to optical fiber gratings, and in particular, to a temperature-compensated long period optical fiber grating filter.

An optical fiber grating is typically used as a filter for selecting an optical signal at a particular wavelength traveling along the core of an optical fiber. The optical fiber grating removes or reflects light at the particular wavelength by inducing a periodic change in the refractive index inside the optical fiber. Such optical fiber gratings are grouped into short period fiber gratings and long period fiber gratings.

The short period fiber gratings reflect light at a particular wavelength, whereas the long period fiber gratings couple light from a core mode to a cladding mode. Among them, long period fiber gratings with a period of tens of micrometers to hundreds of micrometers are used as a gain flattened filter for an erbium doped fiber amplifier (EDFA) because they can remove light at a particular wavelength by coupling light from the core mode to the coupling mode. These long period fiber gratings are fabricated by making a periodic change in the refractive index of the photosensitive core of an optical fiber. The refractive index increases in UV (Ultraviolet)-exposed portions and is kept intact in non-exposed portions, so that a periodic refractive index change occurs along the length direction of the optical fiber.

The long period fiber gratings are significantly influenced by temperature and the ambient refractive index of the cladding in the optical fiber. Micro bending of the optical fiber has a great influence over the central frequency and extinction ratio of the long period fiber gratings that are determined by mode coupling between the core mode and the cladding mode. Coupling occurs when the long period fiber grating filter satisfies a phase matching condition given as

$$\beta_{co} - \beta\ \beta_{cl}^{(m)} = \frac{2\pi}{\Lambda} \tag{1}$$

where $\beta_{co}$ is a propagation constant in the core mode, $\beta_{cl}^{(m)}$ is a propagation (1) constant in the cladding mode, and $\Lambda$ is a grating period.

For $\beta = 2\pi \frac{n}{\lambda}$ (where n is a refractive index and $\lambda$ is a wavelength), Eq. (1) can be expressed as

$$n_{co} - n_{cl}^{(m)} = \frac{\lambda}{\Lambda} \tag{2}$$

Light at a particular wavelength is coupled to the cladding mode by determining the difference between the grating period $\Lambda$ and a refractive index difference ($n_{co}$-$n_{cl}^{(m)}$).

The refractive index difference is readily achieved by appropriately irradiating an optical fiber sensitive to UV light with a UV laser. That is, the optical fiber sensitive to the UV light is covered with a mask with a predetermined grating period $\Lambda$ and the UV laser is projected onto the mask, to thereby increase the refractive index of the core of the photosensitive optical fiber. As the refractive index increases, a coupling wavelength gets longer. For a desired spectrum, that is, desired coupling wavelength and extinction ratio of a long period fiber grating filter device, the UV laser must be projected for an appropriate time with a mask period accurately controlled.

The coupling wavelength of the thus-fabricated long period fiber gratings is influenced by temperature. The shift of the coupling wavelength caused by temperature change is determined by temperature-induced changes of the refractive index and thermal expansion in the length direction of the optical fiber. This relationship is given as

$$d\lambda^{(m)}/dT = (d\Lambda/dT)(\delta n)^{(m)} + \Lambda d(\delta n)^{(m)}/dT$$
$$= (d\lambda^{(m)}/d(\delta n)^{(m)})(d(\delta n)^{(m)}/dT) + (d\lambda^{(m)}/d\Lambda)(d\Lambda/dT)$$
$$\ldots\ldots (3)$$

where T is temperature.

For a general silica optical fiber, $d\lambda^{(m)}/dT$ is 5-15nm/100°C. Temperature dependency can be decreased by setting $d\lambda^{(m)}/d\Lambda$ to a negative value or setting $d(\delta n)^{(m)}/dT$ to zero. In fabricating a long period fiber grating filter with a general optical fiber or a distributed shifted fiber for communication, the second term of Eq. (3) in the right hand is neglected because it is less than the first term in the right hand by tens of times. For example, the coupling wavelength shifts by 5nm per 100°C in Flexcor 1060 of Corning. In the case of a typical distributed shifted fiber, lengthwise expansion shifts the coupling wavelength by only 0.3nm per 100°C and the change of the refractive index shifts the coupling wavelength by 5nm per 100°C. However, the temperature stability of about 0.3nm per 100°C is required of a gain flattened filter, one of application fields of a long period fiber grating filter.

For temperature compensation, the refractive index profile of an optical fiber was designed or a grating period was selected such that $d\lambda^{(m)}/d\Lambda$ in Eq. (3) is a negative value. Alternatively, $B_2O_3$ was added to make dn/dT of Eq. (3) zero.

It is known that $d\lambda^{(m)}/d\Lambda$ is a negative value when $\Lambda < 100\mu m$ by controlling a refractive index in a typical long period fiber filter. In the case of the Flexcor 1060 fiber of Coming, temperature-dependent wavelength change is 0.15-0.45nm/100°C for $\Lambda = 40\mu m$ but a $\lambda^{(m)}$ mode is a 1.1μm region, deviating from the communication region. $d(\delta n)^{(m)}/dT$ can be set to zero by

$$d\lambda^{(m)}/dT = (d\Lambda/dT(\delta n)^{(m)} + \Lambda d(\delta n)^{(m)}/dT \tag{4}$$

where $d\Lambda/dT$ is a term related with thermal expansion. When silica is used, $a_{SiO2} = 5.5 \times 10^7/°C$ and the contribution of $d\Lambda/dT$ to wavelength dependency is negligibly small, 0.1nm or below per 100°C. The effect of $d(\delta n)^{(m)}/dT$ can be expressed as

$$d(\delta rt)^{(m)}/dT = d(n_{01}-n^{(m)})/dT ® d(n_{core} - n^{SiO2})/dT \tag{5}$$

$d(\delta n)^{(m)}/dT$ can be zero by doping the core with appropriate amounts of $GeO_2$ ($dn_{Ge}/dT > dn_{Si02}$) and $B_2O_3$ ($dn_B/dT < dn_{Si02}/dT$). The temperature compensation effect is disclosed in detail "Optical Waveguide Grating and Production Method Thereof", EP 0 800 098 A2.

The present applicant filed an application entitled "A Temperature-Compensated Long Period Fiber Grating Filter Device" for temperature compensation of gratings. Two material mechanisms may be considered in selecting a recoating material to be applied around the cladding for temperature-compensated fiber gratings. As to one of the material mechanisms, in the material system disclosed in Korea Application No. 1999-8332 filed by the present applicant, dn/dT of the core is greater than dn/dT of the cladding due to a higher Ge concentration in the core, that is, the coupling peak of long period fiber gratings shifts to a long wavelength as temperature increases. Here, the requirement of a recoating material are that its refractive index increases with temperature to thereby induce a short wavelength shift effect with the refractive index of a coating material.

As to the other material mechanism, in the material system disclosed in Korea Application No. 1999-38267 filed by the present applicant, dn/dT of the core is less than dn/dT of the cladding by adding Ge/B. As temperature increases, the short wavelength effect takes place in the mode of long period fiber gratings. The requirement of a coating material around the cladding is that its refractive index should be increased with temperature, to thereby compensating for the short wavelength shift effects with the long wavelength shift effect of a recoating material.

In above two cases, the initial refractive index of the coating material around the cladding must be less that the refractive index of the cladding in order to guide both the core mode and the cladding mode.

A typical recoating material, particularly a polymer experiences thermal expansion as temperature increases. Therefore, when the polymer is recoated on long period gratings written in a general optical fiber, the long wavelength shift effect of the long period fiber gratings is added up to the long wavelength shift effect of the recoating. Hence, it is necessary to use a special recoating material having a refractive index decreased with temperature.

Furthermore, the temperature-compensated long period fiber grating filter of Korea Application No. 99-38267 is highly sensitive to the external environment.

It is, therefore, an object of the present invention to provide a temperature-compensated long period fiber grating filter using a multi-cladding structure.

It is another object of the present invention to provide a temperature-compensated long period fiber grating filter using a multi-cladding structure, which is not sensitive to the external environment.

It is a further object of the present invention to provide a long period optical fiber grating filter in which a cladding mode is determined by an inner cladding, the resulting great overlapping integral between a core mode and the cladding mode increases coupling efficiency, and the increased coupling efficiency facilitates growth of a coupling mode in fabricating long period fiber gratings.

To achieve the above objects, there is provided a temperature-compensated long period optical fiber grating filter using a multi-cladding structure. According to one aspect of the present invention, in an optical fiber used for the temperature-compensated long period optical fiber grating filter, a plurality of long period fiber gratings are formed periodically in a core and the core is doped with a first dopant to show a positive coupling wavelength shift as temperature increases. An inner cladding is formed around the core and has a refractive index lower than that of the core. An outer cladding is formed around the inner cladding and has a lower refractive index than that of the inner cladding, and is doped with a second dopant to show a negative coupling wavelength shift as the refractive index of the outer cladding is increased with temperature. The positive wavelength shift and the negative wavelength shift are canceled out, thereby compensating temperature.

According to another aspect of the present invention, in an optical fiber used for the temperature-compensated long period optical fiber grating filter, a plurality of long period fiber gratings are formed periodically in a core and the core is doped with a first dopant to show a negative coupling wavelength shift as temperature increases. An inner cladding is formed around the core and has a refractive index lower than that of the core. An outer cladding is formed around the inner cladding and has a lower refractive index than that of the inner cladding, and is doped with a second dopant to show a positive coupling wavelength shift as the refractive index of the outer cladding is increased with temperature. The positive wavelength shift and the negative wavelength shift are canceled out, thereby compensating temperature.

The above and other objects, features and advantages of the present invention will become more apparent from the following detailed description when taken in conjunction with the accompanying drawings in which:

FIG. 1 is a perspective view of a packaged long period fiber grating filter;
FIG. 2 is a sectional perspective view of long period fiber gratings inside the packaged long period fiber grating filter;
FIG. 3 is a sectional view of the long period fiber grating filter, illustrating a coupling mechanism thereof;
FIG. 4 is a graph showing wavelength shifts versus ambient refractive indexes of a cladding;
FIG. 5 is a graph showing refractive indexes versus dopant concentrations;
FIG. 6 is a graph showing refractive indexes versus the temperature of pure $B_2O_3$;
FIG. 7 illustrates the fiber profile of a temperature-compensated long period fiber grating filter using a double cladding structure according to a preferred embodiment of the present invention;
FIG. 8 illustrates the fiber profile of a temperature-compensated long period fiber grating filter using a multi-cladding structure according to another preferred embodiment of the present invention;
FIG. 9 illustrates the fiber profile of a temperature-compensated long period fiber grating filter using a double cladding structure according to a third preferred embodiment of the present invention; and
FIG. 10 illustrates the fiber profile of a temperature-compensated long period fiber grating filter using a multi-cladding structure according to a fourth preferred embodiment of the present invention.

Preferred embodiments of the present invention will be described hereinbelow with reference to the accompanying drawings. In the following description, well-known functions or constructions are not described in detail since they would obscure the invention in unnecessary detail.

In order to write long period fiber gratings in an optical fiber, a predetermined length of a coating is generally peeled from the optical fiber. Using a UV laser and an amplitude mask, the long period fiber gratings are formed in the coating-free portions.

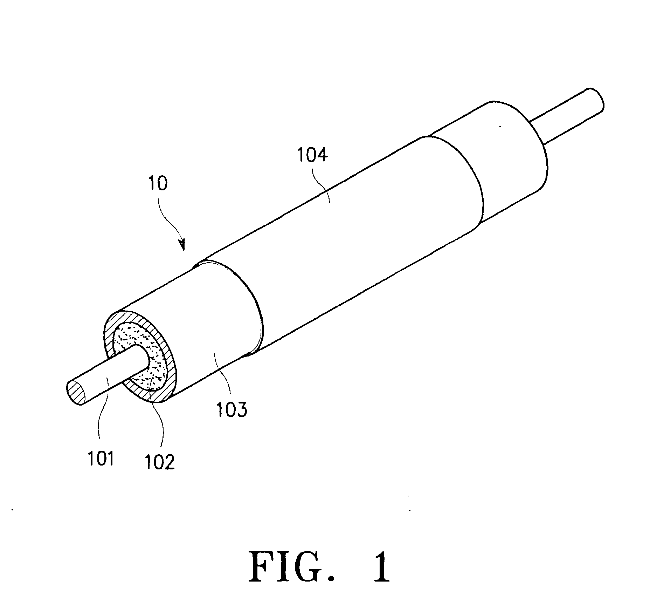

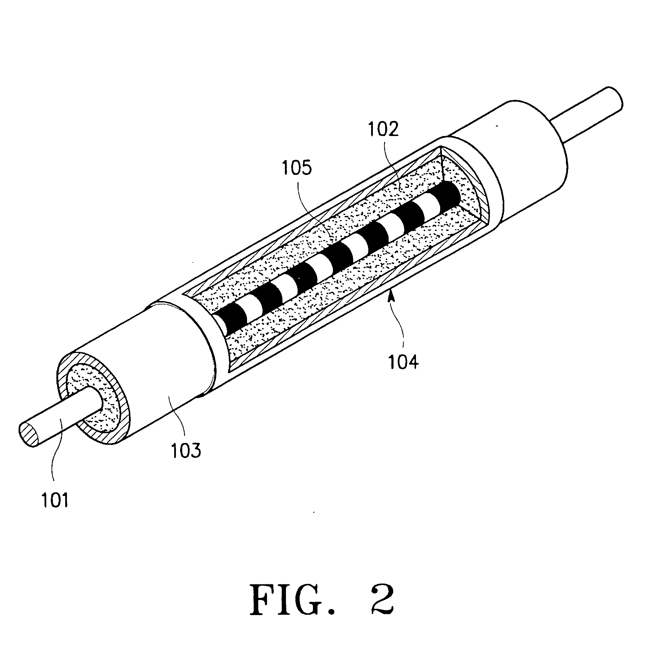

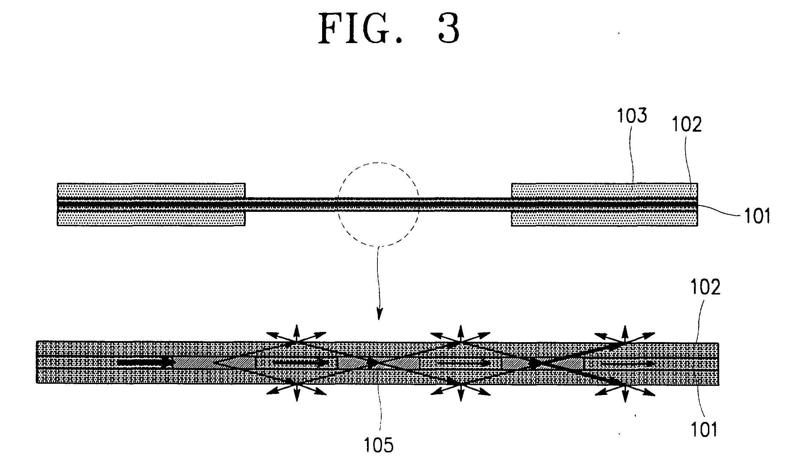

FIG. 1 is a perspective view of a packaged optical fiber grating filter, FIG. 2 is a sectional perspective view of long period fiber gratings in the packaged optical fiber grating filter, and FIG. 3 illustrates a coupling mechanism in the long period optical fiber grating filter.

Referring to FIG. 2, the packaged long period optical fiber grating filter includes a core 101 in which long period fiber gratings 105 are written in every predetermined period, a cladding 102 surrounding the core 101, a coating 103 surrounding the cladding 102, and a recoating 104 formed over the long period fiber gratings 105.

Referring to FIG. 3, light is scattered at a refractive index changing region, that is, at the long period fiber gratings 105 in the fundamental guided mode of the core 101. As the scattered light is coupled to the cladding 102, light at a wavelength satisfying the phase matching condition is coherently reinforced. Part of the light at the wavelength goes out of the cladding 102. Hence, the long period optical fiber grating filter acts as a wavelength dependent attenuator. Light traveling in the fundamental guided mode decreases in intensity as it passes through the long period fiber gratings 105, as indicated by arrows that get thinner along the length of the core 101, and Light at the wavelength coupled to the cladding 102 increases in intensity as indicated by arrows that get thicker toward the cladding 102. The light at the coupling wavelength increases in intensity along the length direction of the optical fiber after passing through the fiber gratings 105. Thus, the long period optical fiber grating filter acts as an optical attenuator.

The refractive index of air, an external factor of the cladding 102 is 1. If the cladding 102 is recoated with a material with refractive index n after the long period fiber gratings 105 are formed, the coupling condition is changed and as a result, the coupling wavelength shifts to a long wavelength or a short wavelength.

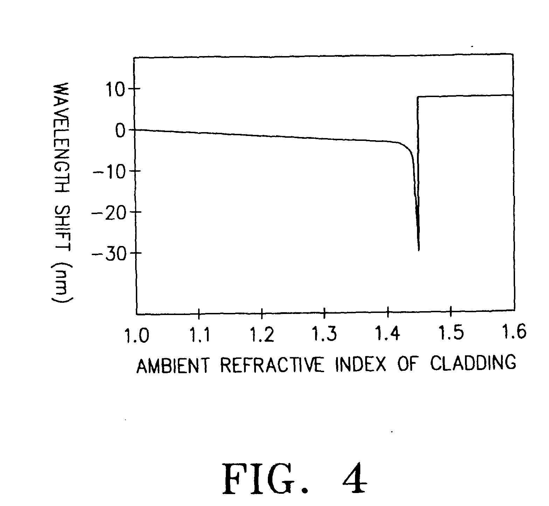

FIG. 4 is a graph showing the shift of the coupling wavelength with respect to a variation in the ambient refractive index of the cladding. Referring to FIG. 4, a coupling peak shifts as the ambient refractive index changes. With the refractive index of air (n=1) as the basis of the ambient refractive index of the cladding, the coupling wavelength shifts to a short wavelength as the ambient refractive index increases from 1.0. The coupling peak disappears when the ambient refractive index equals the refractive index of the cladding. If the ambient refractive index exceeds the refractive index of the cladding, the coupling wavelength shifts to a long wavelength. In other words, the coupling wavelength shifts to a short wavelength in the region where the external refractive index starting from the refractive index of the air is less than the refractive index of the cladding and to a long wavelength in the region where the ambient refractive index is greater than the refractive index of the cladding. Here, the short wavelength shift refers to a negative wavelength shift and the long wavelength shift refers to a positive wavelength shift.

For details of wavelength shift with respect to the change of the external refractive index of the cladding, see "Displacement of the Resonant Peaks of a Long-Period Fiber Grating Induced by a Change of Ambient Refractive Index", 1997 Optics letters: December 1, 1997/Vol. 22, No. 23.

As described above, the present invention is intended to design an optical fiber profile which can compensate temperature utilizing the above-described property of the long period fiber gratings. The present invention is also intended to design an optical fiber which can compensate temperature using a multi-cladding structure.

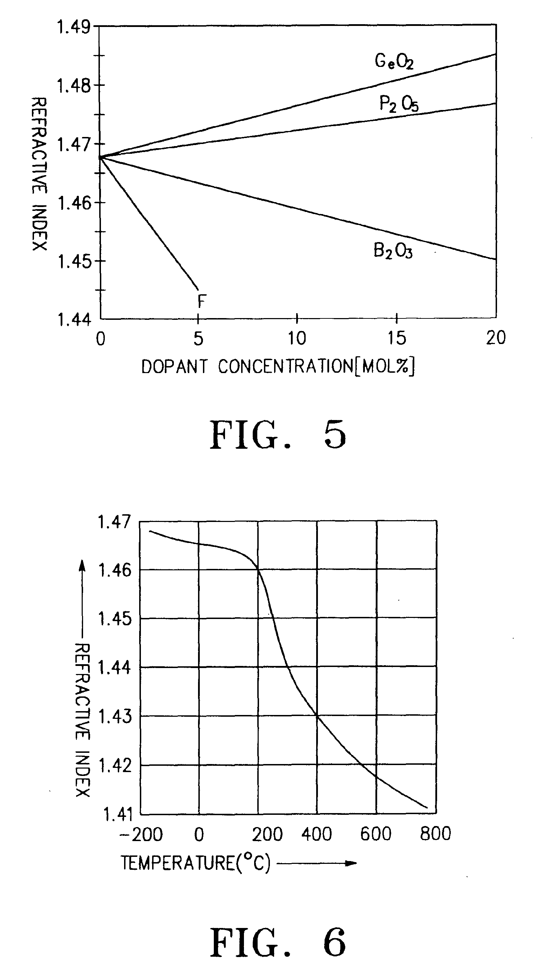

FIG. 5 is a graph showing a refractive index variation with respect to a dopant concentration and FIG. 6 is a graph showing a refractive index variation with respect to the temperature of pure $B_2O_3$. A method of compensating temperature by doping a core with $B_2O_3$ and $GeO_2$ is disclosed in detail in "Optical Waveguide Grating and Production Method Thereof", EP 0 800 098 A2.

According to the present invention, only $GeO_2$ may be used as a dopant or both $B_2O_3$ and $GeO_2$ as dopants for the core. The sum of a coupling wavelength shift caused by an increase in refractive index with the amount of $GeO_2$ and a coupling wavelength shift caused by a decrease in refractive index with the amount of $B_2O_3$ is a positive value in the core.

Only $GeO_2$ may be used as a dopant or both $B_2O_3$ and $GeO_2$ as dopants for an outer cladding. The sum of a coupling wavelength shift caused by an increase in refractive index with the amount of $GeO_2$ and a coupling wavelength shift caused by a decrease in refractive index with the amount of $B_2O_3$ is a negative value in the outer cladding.

If $B_2O_3$ is less in concentration than $GeO_2$ in the core, the long period fiber grating filter has a positive wavelength shift, that is, the coupling wavelength shifts to a long wavelength because a core-cladding refractive index difference increases as temperature increases.

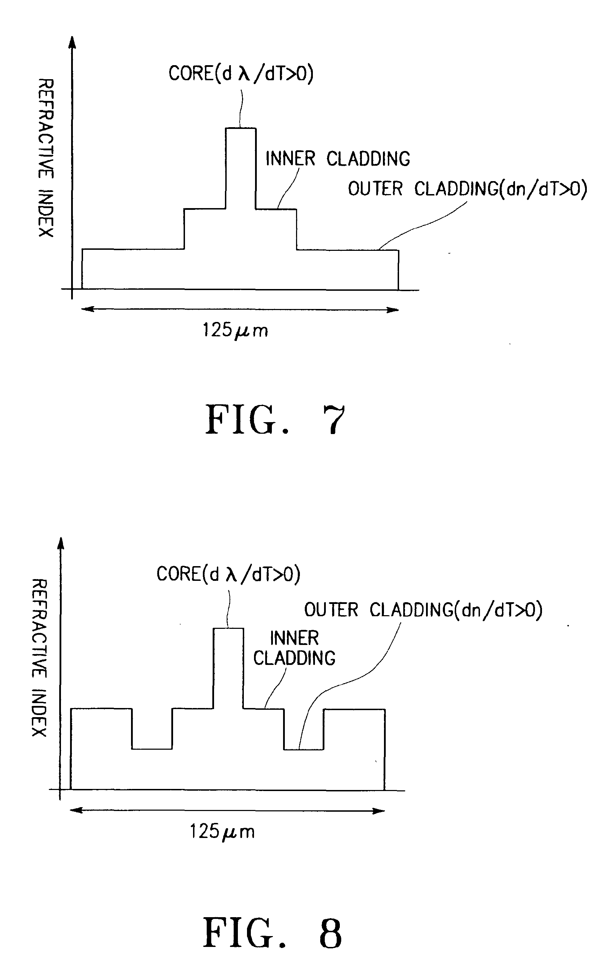

FIG. 7 illustrates an optical fiber refractive index profile of a temperature-compensated long period fiber grating filter according to a preferred embodiment of the present invention. Referring to FIG. 7, an optical fiber includes a core, an inner cladding (primary cladding) surrounding the core, and an outer cladding (secondary cladding) surrounding the inner cladding. The diameter of the optical fiber is 125μm.

To guide the core mode and the cladding mode simultaneously in long period fiber gratings, the refractive index of the outer cladding should be less than that of the inner cladding and the refractive index of the inner cladding should be less than that of the core. In the temperature-compensated long period optical fiber grating filter, a positive wavelength shift occurs between the core and the primary cladding and a negative wavelength shift occurs as the ambient refractive index of the secondary cladding changes by doping the core with a dopant, thereby canceling out the positive wavelength shift and the negative wavelength shift.

The positive wavelength shift means $d\lambda/dT > 0$ and the negative wavelength shift means $d\lambda/dT < 0$, that is, $dn_{secondary\ cladding} > dT$.

The temperature-compensated long period fiber grating filter using a multi-cladding structure will be described in detail. If $dn/dT$ of the core is greater than that of the outer cladding by doping the core with an appropriate amount of Ge or Ge+B, that is, if the coupling wavelength shifts by a positive value as temperature increases, the refractive index of the outer cladding should be less than that of the inner cladding and should increase with temperature.

To obtain an inner cladding with a refractive index less than that of the core, the inner cladding is formed of pure silica or silica doped with small amounts of Ge and B. As shown in FIG. 6, as the concentration of B as a dopant increases, a refractive index decreases. Silica is doped with B to design an optical fiber with an outer cladding having a refractive index lower than that of an inner cladding and increased with temperature.

FIG. 8 illustrates an optical fiber refractive index profile of a temperature-compensated long period fiber grating filter using a multi-cladding structure according to another preferred embodiment of the present invention. An optical fiber shown in FIG. 8 has an inner cladding and outer claddings. Once the boundary condition between the inner cladding and the outer claddings, a basic optical fiber structure for temperature compensation is completed. Specifically, the optical fiber has a core, a primary cladding surrounding the core, a secondary cladding surrounding the primary cladding, and a third cladding surrounding the secondary cladding.

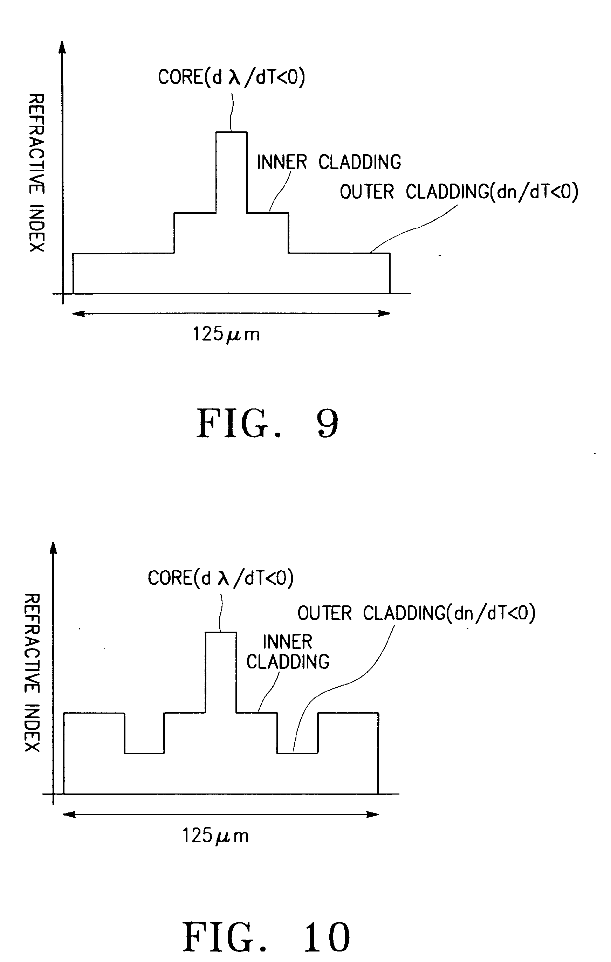

FIG. 9 illustrates the optical fiber refractive index profile of a temperature-compensated long period optical fiber filter device according to a third preferred embodiment of the present invention. Referring to FIG. 9, an optical fiber includes a core, an inner cladding surrounding the core, and an outer cladding surrounding the inner cladding. The diameter of the optical fiber is 125μm.

To guide the core mode and the cladding mode simultaneously in long period fiber gratings, the refractive index of the outer cladding should be less than that of the inner cladding and the refractive index of the inner cladding should be less than that of the core. In the temperature-compensated long period optical fiber grating filter according to the third embodiment of the present invention, a negative wavelength shift occurs between the core and the primary cladding by doping the core with a dopant and a positive wavelength shift occurs as the ambient refractive index of a doped secondary cladding changes by doping the secondary cladding with a dopant, thereby canceling out the positive wavelength shift and the negative wavelength shift.

Here, the negative wavelength shift means $d\lambda/dT < 0$ and the positive wavelength shift means $d\lambda/dT > 0$, that is, $dn_{secondary\ cladding}/dT < 0$.

The temperature-compensated long period fiber grating filter using a multi-cladding structure will be described in detail. If dn/dT of the core is less than that of the outer cladding by doping the core with an appropriate amount of Ge or Ge+B, that is, if the coupling wavelength shifts by a negative value as temperature increases, the refractive index of the outer cladding should be less than that of the inner cladding and should decrease with temperature.

To obtain an inner cladding with a refractive index less than that of the core, the inner cladding is formed of pure silica or silica doped with a small amount of B or Ge+B. As shown in FIG. 6, as the concentration of B as a dopant increases, a refractive index decreases. Silica is doped with B to design an optical fiber with an outer cladding having a lower refractive index than that of an inner cladding and decreased with temperature.

FIG. 10 illustrates an optical fiber refractive index profile of a temperature-compensated long period fiber grating filter device using a multi-cladding structure according to a fourth preferred embodiment of the present invention. An optical fiber shown in FIG. 10 has an inner cladding and outer claddings. Once the boundary condition between the inner cladding and the outer claddings, a basic optical fiber structure for temperature compensation is completed. Specifically, the optical fiber has a core, a primary cladding surrounding the core, a secondary cladding surrounding the primary cladding, and a third cladding surrounding the secondary cladding. Consequently, the coupling wavelength shifts are canceled out according to the kinds and concentrations of dopants added to the core and the outer cladding, thereby compensating temperature for the long period fiber gratings.

In accordance with the present invention, a novel optical fiber of a multi-cladding structure is designed to be insensitive to an external environment and temperature-compensated. Therefore, the optical fiber is stably used for an optical fiber grating filter without a temperature controller in diverse environments. Furthermore, since a cladding mode is determined by an inner cladding, the overlapping integral between a core mode and the cladding mode is great, a coupling efficiency is high, and thus a coupling mode is readily grown in fabricating long period fiber gratings.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A temperature-compensated long period optical fiber grating filter comprising an optical fiber,
   wherein the optical fiber comprises:
      a core having a plurality of long period fiber gratings formed periodically and doped with a first dopant to show a positive coupling wavelength shift as temperature increases;
      **characterized by**

      an inner cladding surrounding the core and having a refractive index lower than that of the core; and
      an outer cladding surrounding the inner cladding, having a lower refractive index than that of the inner cladding, and doped with a second dopant to show a negative coupling wavelength shift as the refractive index of the outer cladding is increased with temperature,
      whereby the positive wavelength shift and the negative wavelength shift are canceled out.

2. The temperature-compensated long period optical fiber grating filter of claim 1, wherein the inner cladding is formed of pure silica.

3. The temperature-compensated long period optical fiber grating filter of claim 1 or claim 2, wherein the first dopant includes $GeO_2$.

4. The temperature-compensated long period optical fiber grating filter of any of the claims 1 to 3, wherein the second dopant includes $B_2O_3$.

5. The temperature-compensated long period optical fiber grating filter of any of the claims 1 to 4, wherein the first dopant includes $GeO_2$ and $B_2O_3$, and the sum of the coupling wavelength shift caused by the refractive index of the core increased with the concentration of $GeO_2$ and the coupling wavelength shift caused by the refractive index of the core decreased with the concentration of $B_2O_3$ represents a positive wavelength shift.

6.  The temperature-compensated long period optical fiber grating filter of any of the claims 1 to 5, wherein the second dopant includes $GeO_2$ and $B_2O_3$, and the sum of the coupling wavelength shift caused by the refractive index of the outer cladding increased with the concentration of $GeO_2$ and the coupling wavelength shift caused by the refractive index of the outer cladding decreased with the concentration of $B_2O_3$ represents a negative wavelength shift.

7.  A temperature- compensated long period optical fiber grating filter comprising an optical fiber,
    wherein the optical fiber comprises:
    a core having a plurality of long period fiber gratings formed periodically and doped with a first dopant to show a negative coupling wavelength shift as temperature increases;
      **characterized by**

      an inner cladding surrounding the core and having a refractive index lower than that of the core; and
      an outer cladding surrounding the inner cladding, having a lower refractive index than that of the inner cladding, and doped with a second dopant to show a positive coupling wavelength shift as the refractive index of the outer cladding is increased with temperature,
      whereby the positive wavelength shift and the negative wavelength shift are cancelled out.

8.  The temperature-compensated long period optical fiber grating filter of claim 7, wherein the inner cladding is formed of pure silica.

9.  The temperature-compensated long period optical fiber grating filter of claim 7 or claim 8, wherein the first dopant includes $GeO_2$.

10. The temperature-compensated long period optical fiber grating filter of any of the claims 7 to 9, wherein the second dopant includes $B_2O_3$.

11. The temperature-compensated long period optical fiber grating filter of any of the claims 7 to 10, wherein the first dopant includes $GeO_2$ and $B_2O_3$ and the sum of the coupling wavelength shift caused by the refractive index of the core increased with the concentration of $GeO_2$ and the coupling wavelength shift caused by the refractive index of the core decreased with the concentration of $B_2O_3$ represents a negative wavelength shift.

12. The temperature-compensated long period optical fiber grating filter of any of the claims 7 to 11, wherein the second dopant includes $GeO_2$ and $B_2O_3$ and the sum of the coupling wavelength shift caused by the refractive index of the outer cladding increased with the concentration of $GeO_2$ and the coupling wavelength shift caused by the refractive index of the outer cladding decreased with the concentration of $B_2O_3$ represents a positive wavelength shift.

FIG. 1

FIG. 2

FIG. 3

FIG. 4

FIG. 5

FIG. 6

CORE(d λ /dT>0)

INNER CLADDING

OUTER CLADDING(dn/dT>0)

REFRACTIVE INDEX

125μm

# FIG. 7

CORE(d λ /dT>0)

INNER CLADDING

OUTER CLADDING(dn/dT>0)

REFRACTIVE INDEX

125μm

# FIG. 8

CORE(d λ /dT<0)

INNER CLADDING

OUTER CLADDING(dn/dT<0)

REFRACTIVE INDEX

125 μm

# FIG. 9

CORE(d λ /dT<0)

OUTER CLADDING(dn/dT<0)

INNER CLADDING

REFRACTIVE INDEX

125 μm

# FIG. 10